Europäisches Patentamt

European Patent Office

Office européen des brevets

(11) Veröffentlichungsnummer: **0 305 591**

**A2**

(12) **EUROPÄISCHE PATENTANMELDUNG**

(21) Anmeldenummer: **87117425.6**

(22) Anmeldetag: **06.05.83**

(51) Int. Cl.4: **G01D 5/22 , G01B 7/02**

(30) Priorität: **13.05.82 CH 3000/82**

(43) Veröffentlichungstag der Anmeldung:
**08.03.89 Patentblatt 89/10**

(60) Veröffentlichungsnummer der früheren
Anmeldung nach Art. 76 EPÜ: **0 098 238**

(84) Benannte Vertragsstaaten:
**AT CH DE FR GB IT LI SE**

(71) Anmelder: **C.A. Weidmüller GmbH & Co.**
**Klingenbergstrasse 16**
**D-4930 Detmold(DE)**

(72) Erfinder: **Schmall, Karl-Heinz**
**Waldstrasse 20**
**D-7570 Baden-Baden 19(DE)**

(74) Vertreter: **Hepp, Dieter et al**
**HEPP & Partner AG Marktgasse 18**
**CH-9500 Wil(CH)**

(54) **Induktive Sensoranordnung und Messanordnung zur Verwendung derselben.**

(57) Die Erfindung beinhaltet eine Messanordnung
und eine induktive Sensoranordnung mit einer Senderspule, welche durch einen HF-Oszillator gespeist
wird, und einer Empfängerspule, in welche ein
Wechselfeld durch die Senderspule induziert wird.
Senderspule und/oder Empfängerspule sind in wenigstens zwei Teilwicklungen unterteilt, welche derart
gegeneinander geschaltet sind, dass sich die induzierten Teilspannungen wenigstens teilweise aufheben. Die Teilwicklungen sind in bezug auf ein metallisches Objekt so angeordnet, dass sich bei Lageveränderung in wenigstens einer Richtung die Relativlage jeder einzelnen Teilwicklung in bezug auf das
Objekt unterschiedlich ändert. Daraus resultiert unterschiedliche Beeinflussung der Induktivitäten der
beiden Teilwicklungen mit entsprechender Änderung
von Phasenlage und Ausgangsspannung.

Durch Hilfssensoren wird der relative Abstand
jeder Teilwicklung zum Objekt überwacht. Sofern die
jeweiligen Abstände abweichen, wird durch die Hilfssensoren ein Kompensationssignal gewonnen, mit
welchem Fehler durch Schräglage des Objekts oder
versetzter Objektkanten vermieden werden können.

Fig. 1

EP 0 305 591 A2

## Induktive Sensoranordnung und Messanordnung zur Verwendung derselben

Die Erfindung betrifft eine induktive Sensoranordnung gemäss Oberbegriff von Patentanspruch 1 sowie eine Messanordnung gemäss Oberbegriff von Patentanspruch 13.

Sensoranordnungen zur Ermittlung der Relativlage von Werkzeugen in bezug auf ein zu bearbeitendes Werkstück sind insbesondere als Höhensteuerungen kapazitiver oder induktiver Bauart seit langem bekannt und gebräuchlich. Derartige Sensoranordnungen sind z.B. in den DE-OS 27, 26 648, 27 47 539 und 28 29 851 beschrieben.

Bei induktiven Anordnungen ist in der Regel am Werkzeug eine Spule vorgesehen, die ebenfalls als frequenzbestimmendes oder mit-frequenzbestimmendes Glied eines Schwingkreises ausgebildet ist, wobei durch die Abstandsänderung zwischen Spule und Werkstück eine unterschiedliche Dämpfung und Induktivitätsänderung der Spule und damit des Schwingkreises bewirkt wird.

Derartige Sensoranordnungen eignen sich lediglich zur Abstandsmessung über flächigen Objekten und sind z.B. nicht verwendbar, wenn es darum geht, in der Nähe von Objektkanten oder bei unregelmässigen Objekten oder im Fall von Objekten mit Schlitzen oder anderen Unterbrechungen ohne Störung durch diese Unregelmässigkeiten den Abstand konstant zu ermitteln oder sogar den Unregelmässigkeiten, z.B. den Spalten, zu folgen. Ersichtlicherweise wird nämlich durch eine derartige Unregelmässigkeit, wie z.B. eine Spalte, die Induktivität bzw. die Kapazität in gleicher Weise beeinflusst, wie es dann der Fall wäre, wenn sich die Spule bzw. die Kondensatorplatte weiter vom Werkstück entfernt. Die Signale lassen also keinerlei Differenzierung zwischen einer zu grossen Entfernung und einer Unregelmässigkeit in der Oberfläche, wie z.B. einer Spalte oder einer Kante, zu.

Die EP-A-0016638 zeigt eine rein passive induktive Messonde zur Abstandsmessung mit einer Mehrzahl von Spulen, die durch Wechselstrom gespeist werden. Jede der Spulen hat dazu jeweils zwei externe Anschlüsse.

Bei sämtlichen Spulen handelt es sich also um "Sender-Spulen" in der Terminologie der vorliegenden Erfindung. Der Strom durch diese Senderspulen wird gemessen, wobei Impedanzänderungen der "Sender-Spule" selbst durch Wirkelstrom-Rückwirkungen ermittelbar sind. Derartige Abstands-Messanordnungen sing in Vielzahl bekannt und gebräuchlich, z.B. auch aus der deutschen Offenlegungsschrift 2 747 538, welche auf den gleichen Erfinder zurückgeht, wie die vorliegende Anmeldung. Derartige Abstands-Messanordnungen eignen sich nicht zur Positionsermittlung an Objekten mit unregelmässiger Oberfläche, z.B. an Werkstücken mit Längsrillen, Bohrungen, Schweissnähten und dgl. Allenfalls lässt sich gleicher Abstand zu verschiedenen Wänden eines Gehäuses herstellen -vorausgesetzt, der Elektroden-Durchmesser ist kleiner als die Oeffnung des Gehäuses.

So wird gerade aus der EP-A-16 638 dreierlei deutlich:

1. Das Einbringen der bekannten Sonde in ein Loch setzt voraus, dass das Loch grösser ist als die Sonde - kleinere Löcher sind positionsmässig nicht erfassbar;

2. Grössere Löcher, bzw. Lochkanten können ebenfalls nicht positionsmässig erfasst werden, weil der Erfassungsbereich der Spulen durch Ausdehnung des Magnetfelds und Empfindlichkeit der Messanordnung begrenzt ist;

3. Die Anordnung lässt sich nur für die Mitten-Findung von Löchern (mit den vorstehenden Einschränkungen), keineswegs jedoch für andere Zwecke, wie z.B. Nahterfassung oder Ermittlung von Objekt-Erhebungen verwenden. Mit einer Sensoranordnung gemäss der Erfindung liesse sich die in der EP-A-16 638 gestellte Aufgabe wesentlich einfacher, schneller und vor allem auch mit grösserer Empfindlichkeit, d.h. Genauigkeit lösen.

Die Entgegenhaltung dokumentiert, als technischer Hintergrund, den Stand der Technik im Jahr 1980 (dem Anmeldetag der Entgegenhaltung) und demonstriert eindrücklich die erfinderische Leistung des Anmeldungsgegenstands.

Die DE-A-2 928 899 zeigt eine Vorrichtung zum Bestimmnen der Mitte einer Schweissnaht. Dabei wird durch separat angeordnete Spulen ein Magnetfeld in einem Eisenrohr erzeugt. Magnet-Streufelder werden durch Magnetfluss-Messanordnungen ermittelt.

Die Anordnung eignet sich ersichtlicherweise nur für magnetisierbare Materialien - die Erzeugung eines Magnetflusses ist Voraussetzung! (Mit dem Sensor gemäss vorliegender Erfindung können sämtliche elektrisch leitfähigen Materialien erfasst werden.) Ausserdem ist die Anordnung in einer den praktischen Anewendungsbereich drastisch einengenden Weise störanfällig: bei vielen Bearbeitungsvorgängen wird in uas zu bearbeitende Objekt externe Störspannung induziert - z.B. bei allen elektrischen Schweissvorgängen, beim Erodieren etc. Ausserdem kann sich bei Bearbeitungsvorgängen auch die elektrische Leitfähigkeit des Materials ändern, was ebenfalls unvermeidbar zu Messfehlern führt.

Die unterschiedliche Funktionsweise der DE-A-29 28 899 wird insbesondere auch daraus deutlich, dass die in den Suchspulen induzierten Spannungen phasengleich sind und generell gleiche Amplitude aufweisen. Lediglich die Störspannungsspitzen sind ungleich - eine Folge der Schweillnaht. Der Sinusverlauf der Grund-Magnetisierung wird bei der Auswertung sogar herausgefiltert.

Auch die GB-A-2 085 594, die US-PS-4,015,101 und die US-PS-3, 171, 071 dokumentieren den vorstehend abgehandelten Stand der Technik.

Aufgabe der Erfindung ist es also, die bekannten Mes- bzw. Sensoranordnungen zu verbessern, insbesondere bei einfachster, wirtschaftlicher Bauform genauere Signale zu erhalten und auch im Fall von Unregelmässigkeiten, insbesondere Spalten im Objekt (oder zwischen zwei Objekten) verwertbare und vor allem differenzierte Mess-Signale zu gewährleisten.

Erfindungsgemäss wird dies durch Anordnungen gemäss kennzeichnenden Teil von Patentanspruch 1 bzw. Patentanspruch 13 erreicht.

Bei der Erfindung ist also eine direkte induktive Kopplung von Empfängerspule und Senderspule vorgesehen - durch das Objekt beeinflusst wird das ursprüngliche von der Senderspule erzeugte elektromagnetische Feld, welches auch die unmittelbasr und induktive gekoppelten Empfängerspulen und das Objekt erfasst. Störspannungen wirken demnach regelmässig auf das Gesamtfeld, sie wirken sich in beiden Empfängerspulen gleichmässig aus und werden dementsprechend automatisch kompensiert.

Bei der Sensoranordnung gemäss vorliegender Erfindung tritt durch Objektunregelmässigkeiten eine Phasenverschiebung der Ströme in den Teilwicklungen auf, die ebenso eine Auswertung zulässt, wie Amplituden-Schwankungen im Ausgangskreis der Empfänger-Spulen. Die Erfindung ermöglicht also eine direkte Messwerterfassung im erzeugten elektromagnetischen Feld, vor allem mit den Vorteilen grösserer Genauigkeit, geringerer Störanfälligkeit und trotzdem vereinfachter Bauform.

Bei der Erfindung wird somit vom bekannten Prinzip der Beeinflussung einer frequenzbestimmenden Induktivität oder Kapazität abgegangen und stattdessen durch eine Senderspule ein Wechselfeld erzeugt, welches in den Teilwicklungen einer Empfängerspule eine Wechselspannung induziert. Durch das Objekt, z.B. das metallische Werkstück, wird bei Annäherung das Wechselfeld verändert. Dementsprechend wird auch die Induktion aus der Senderspule in die Empfängerspule unmittelbar beeinflusst. Dadurch, dass die beiden Teilwicklungen sich bei einer Lageveränderung des Objekts unterschiedlich vom Objekt entfernen bzw. sich diesem nähern, ergibt sich eine unterschiedliche Feldverteilung der HF-Felder und eine Phasenverschiebung in den beiden Teilwicklungen. Durch Vergleich der Teilspannungen der beiden Teilwicklungen lässt sich dabei auf einfachste Weise die Lageveränderung des Objekts ermitteln. Am einfachsten kann dies dadurch erfolgen, dass die Teilwicklungen unmittelbar ("direkt") mit entgegengesetztem Wicklungssinn zusammengeschaltet sind, so dass sich die Teilspannungen der Teilwicklungen aufheben, sofern sie in gleicher Weise durch das Objekt beeinflusst werden. Aendert sich dagegen die Relativlage des Objekts, dann tritt eine unterschiedliche Beeinflussung der beiden Teilwicklungen auf und die Teilspannungen kompensieren sich nur mehr teilweise, so dass die Empfängerwicklung ein verwertbares Ausgangssignal abgibt. Da durch das Objekt eine Aenderung der Feldverteilung der HF-Felder und auch eine Induktivitätsänderung bewirkt wird, resultiert aus der Lageveränderung auch eine unterschiedliche Induktivitätsänderung der beiden Teilwicklungen, so dass eine Phasenänderung der Wechselspannung am Ausgang der Empfängerspule verglichen mit dem Signal der Senderspule ermittelt werden kann. Diese Phasenänderung eignet sich in vielen Fällen wesentlich besser als eine Spannungsänderung zur Auswertung. Ersichtlicherweise kann daher sowohl die Sender- als auch die Empfängerspule in die zwei Teilwicklungen unterteilt werden. Bei der Unterteilung der Empfängerspule lässt sich jedoch besonders hohe Empfindlichkeit der Anordnung erreichen.

Die Sensoranordnung ist besonders empfindlich für Aenderungen der Relativlage, wenn die Empfängerspule auf der dem Objekt zugewandten Seite der Senderspule angeordnet und/oder mit der Wicklungsachse zum Objekt hin gerichtet ist. Dadurch tritt nämlich in erster Linie eine Phasenverschiebung in den Teilwicklungen der Empfängerspule auf, die für das Ausfgangssignal verwertbar ist, und nicht eine auf beide Empfängerspulen wirkende Dämpfung des Feldes der Senderspule.

Die vorstehend beschriebenen Phasenveränderungen der Signale der Empfängerspule sind auch ganz besonders ausgeprägt feststellbar, wenn auch die Senderspule wenigstens zwei gegensinnig gewickelte Teilwicklungen aufweist, wobei die beiden Windungen jeder Doppelwicklung in unterschiedlichem Abstand von der Empfängerspule bzw den Teilwicklungen der Empfängerspule angeordnet sind. Die beiden Windungen der Doppelwicklungen erzeugen nämlich jeweils ein entgegengerichtetes Wechselfeld, welches sich, gleicher Abstand von den Windungen vorausgesetzt, aufhebt. Durch den unterschiedlichen Abstand der Teilwicklungen der Empfängerspule tritt jedoch keine vollständige Feldkompensation auf. In den beiden Teilwicklungen werden Felder unterschiedlicher Phasenlage aufgrund der unterschiedlichen Abstände von den beiden Windungen induziert. Wird deshalb eine der beiden Teilwicklungen stärker gedämpft und zusätzlich noch in der Induktivität verändert, so resultiert daraus ein Ueberwiegen der Spannung und Phase der anderen Teilwicklungen, wodurch ein starke und gut messbare Phasenänderung am Ausgang der Empfängerspulen-Teilwicklungen ermittelbar ist.

Statt einer sozusagen unmittelbaren Kompensation der beiden Teilwicklungen der Empfängerspule durch Gegeneinanderschalten im umgekehrten Windungssinn kann selbstverständlich auch jede der Spulen separat an eine Auswertungsschaltung, vorteilhafterweise einen Differenzverstärker, angeschlossen werden und sodann können die verstärkten Signale verarbeitet, z.B. also miteinander verglichen werden. Dabei lässt sich dann in bekannter Weise auch gleichzeitig Dämpfung durch Annäherung und Phasenverschiebung durch Seitenversatz in bezug auf die Werkstück-Ünregelmässigkeit separat ermitteln und auswerten.

Zum Abtasten von Objektunregelmässigkeiten, wie z.B. Spalten, ggf. auch zur eigentlichen Messung der Breite derartiger Spalten oder anderer Objektunregelmässigkeiten hat es sich bosonders bewährt, wenn die Teilwicklungen senkrecht zum Objekt zu beiden Seiten der Objektunregelmässigkeit angeordnet sind. Die Teilwicklungen können jedoch auch dazu horizontal nebeneinander liegend und zwischen sich einen Spalt bildend im gleichen Abstand vom Objekt und von der Senderspule angeordnet werden.

Sofern die Relativlage der Empfängerspule zu einem punktförmigen Objekt, z.B. auch einem Loch im Objekt, ermittelt werden soll, kann eine geradzahlige Mehrzahl von Teilwicklungen vorgesehen werden, die jeweils paarweise, zusammengeschaltet werden. Auf diese Weise sind durch entsprechenden Vergleich Lageveränderungen des Objekts in praktisch jeder beliebigen Richtung ermittelbar. Besonders vorteilhaft lässte sich dies erreichen, wenn die Teilwicklungen der Empfängerspule im Querschnitt etwa kreissegmentartig ausgebildet sind.

Besonders vorteilhaft lässt sich die Erfindung realisieren, wenn die Teilwicklungen der Empfängerspule symmetrisch zur Senderspule angeordnet sind. Dbei kann es sich sowohl um punktsymmetrische als auch axialsymmetrische Anordnung handeln. Bei axialsymmetrischer Anordnung lässt sich erreichen, dass die Empfängerspulen bei entgegengesetzter Schaltung und gleicher Windungszahl solange kein Signal abgeben, wie das metallische Objekt, insbesondere das Werkstück, beide Teilwicklungen in gleicher Weise beeinflusst. Dies lässt sich z.B in völlig neuer Weise dadurch auswerten, dass die Sensoranordnung symmetrisch über einem Spalt im Werkstück, wie es sich z.B beim Schweissen von Stahlplatten ergibt, angeordnet wird. Solange die Sensoranordnung exakt mittig über dem Spalt geführt ist, werden beide Teilwicklungen in gleicher Weise beeinflusst und es wird - völlig unabhängig von der Höhe über dem Spalt - lein Signal am Ausgang der Emfpängerspulen auftreten. Verändert sich dagegen die Lage der Sensoranordnung seitlich, dann wird eine der beiden Emfpängerspulen stärker durch das Werkstück beeinflusst, es tritt Induktivitätsveränderung auf und am Ausgang der Empfängerspule erscheint ein die Abweichungen charakterisierendes Signal.

Soll dagegen die Annäherung der Empfängerspule seitlich an eine Objektunregelmässigkeit, wie z.B. eine Objektkante, ermittelt werden, kann es sich empfehlen, die Empfängerspulen etwa parallel zum Objekt, d.h. also "liegend" und die Senderspule entweder auf der dem Objekt abgewandten Seite beider Teilwicklungen oder aber zwischen beiden Teilwicklungen anzuordnen. Dadurch, dass die beiden Teilwicklungen unterschiedlichen Abstand zum Objekt haben, wird durch Aenderung der Relativlage des Objekt jeweils die Induktivität der beiden Teilwicklungen unterschiedlich beeinflusst, was zu unterschiedlichen Phasenverschiebungen und auch Dämpfungen führt.

Durch Anordnung der zusätzlichen Hilfssensoren lässt sich der Abstand jeder der Teilwicklungen vom Objekt ermitteln. Sofern unterschiedliche Abstände und unterschiedliche Beeinflussung der Teilspulen, d.h. also eine asymmetrische Ueberlagerung der durch die Objektunregelmässigkeiten bewirkten Beeinflussung festgestellt wird, kann Kompensation des eventuell bewirkten Fehlers erreicht werden.

Die Erfindung ist im folgenden in Ausführungsbeispielen anhand der Zeichnungen näher erläutert. Es zeigen:

Figur 1 die schematische Darstellung einer Anordnung mit den Merkmalen der Erfindung in Seitenansicht,

Figure 1a die Sensoranordnung gemäss Figure 1 mit zwei Hilfssensoren,

Figure 2 die Sensoranordnung gemäss Figure 1 von unten

Figure 2a die Sensoranordnung gemäss Figure 1a von unten

Figur 3 ein abgewandelte Ausführungsform der Erfindung

Figure 4 ein weiter abgewandeltes Ausführungsbeispiel, bei dem die Empfängerspule aus vier Teilwicklungen besteht,

Figure 5 das Blockschaltbild einer Auswertungsschaltung mit einer Sensoranordnung,

Figure 6 eine Sensoranordnung mit indirekt gegengeschalteten Teilwicklungen

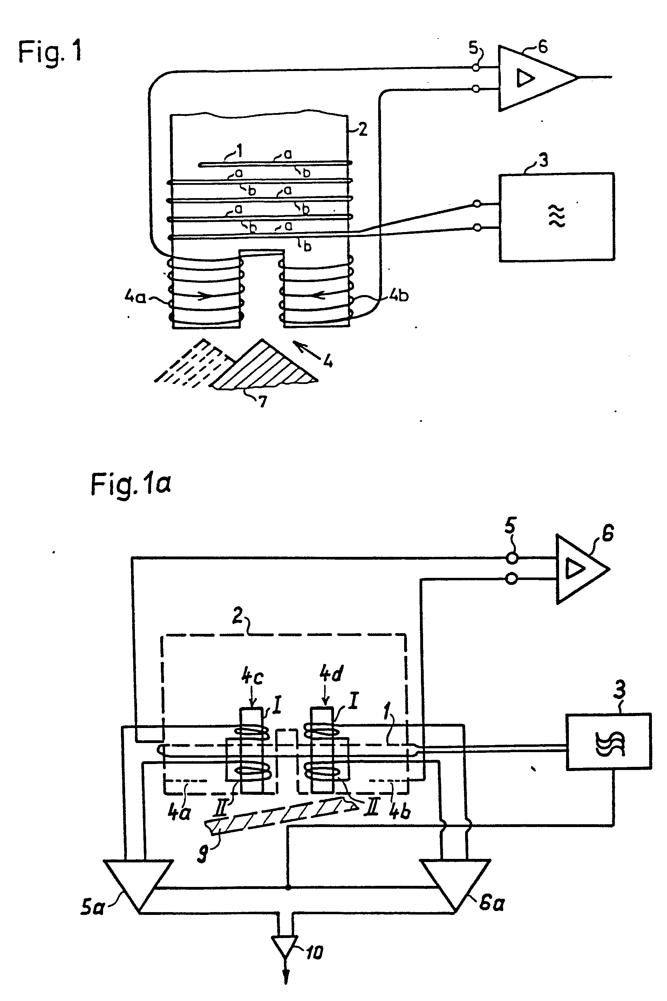

Gemäss Figure 1 ist eine aus zwei Teilwicklungen (a, b) bestehende Senderspule 1 auf einem Keramik-Spulenträger 2 angeordnet und mit einem Hochfrequenz-Oszillator 3 verbunden. Durch die entgegengerichtete Wicklungsanordnung der Teilspulen a, b Senderspulen 1 wird durch diese kein Hochfrequenz-Störsignal abgegeben, da die jeweils entgegengerichteten Felder der gegensinnigen Windungsabschnitte a und b sich kompensieren. In bezug auf die Teilwicklungen 4a und 4b einer Empfängerspule 4 ist jedoch der Abstand der Windungsabschnitte a grösser als der Abstand der Wicklungsabschnitte b der Sendespule 1. Damit überwiegt im Hinblick auf die Induktion in den Teilwicklungen 4a und 4b des Feld der Windungen b, so dass in die Teilwicklungen 4a und 4b eine Wechselspannung induziert wird.

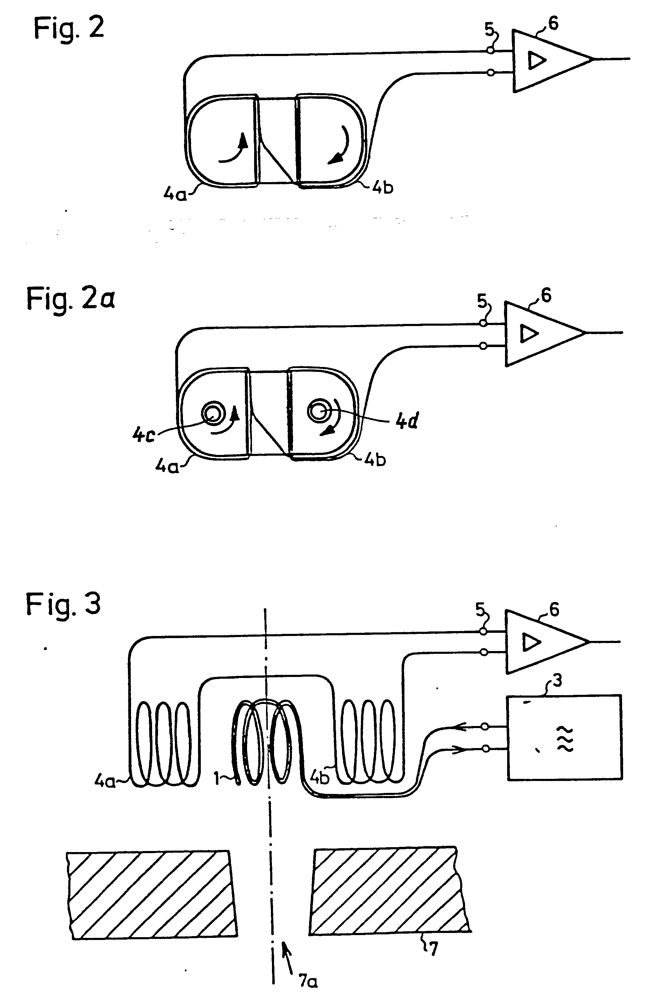

Wie auch aus Figure 2 ersichtlich ist, sind jedoch die Teilwicklungen 4a und 4b ihrerseits wiederum gegensinnig gewickelt und weisen die gleiche Windungszahl auf, so dass sich die Teilspannungen in den Teilwicklungen 4a nd 4b kompensieren und am Eingang 5 eines Verstärkers 6 kein Signal anliegt, solange die Teilwicklungen 4a and 4b nicht in ihrer bestehenden Symemetrie gestört werden. Unter den Teilwicklungen 4a und 4b ist symmetrisch fluchtend zur Gesamtanordnung ein Objekt 7 schematisch dargestellt. In der Darstellung ist das Objekt 7 ebenfalls absolut symmetrisch bezüglich der Teilwicklungen 4a und 4b, so dass die vom metallischen Objekt 7 ausgehende Induktivitätsbeeinflussung in beiden Teilwicklungen 4a und 4b gleich wirkt und das Signal am Ausgang dementspreschend kompensiert wird. Verändert sich jedoch die Relativlage des Objekts 7 in der gestrichelt angedeuteten Weise, wird ersichtlicherweise die Teilwicklung 4a wesentlich stärker beeinflusst, was eine Veränderung der Induktivität und der Phasenlage in der Teilwicklung 4a zur Folge hat. Dementsprechend entspricht die Teilspannung in der Teilwicklung 4a nicht mehr der Teilspannung in der Teilwicklung 4b, wobei die Veränderung sowohl den Spannungswert als auch die Phasenlage betrifft. Am Eingang 5 des Verstärkers 6 erscheint dementsprechend ein Signal, welches in der Amplitude und der Phasenlage der Veränderung der Relativlage des Objekts in die gestrichelte Position entspricht. Die Auswertung dieses Signals, z.B.. zur Auslösung eines Warnsignals oder zur Auswertung und Darstellung eines der Abweichung entsprechenden Signals oder auch zur Aktivierung einer Nachführsteuerung, ist nicht Gegenstand dieser Erfindung und bedarf hier keiner näheren Erläuterung.

Die Figuren 1a und 2a zeigen einen Sensor gemäss Figuren 1 und 2, bei denen in die Teilwicklung 4a eine Hilfswicklung 4c und in die Teilwicklung 4b eine Hilfswicklung 4d eingebracht sind.

Beide Hilfswicklungen sind mit je zwei Spulen I und II versehen, die in Figure 2a in der Tiefe hintereinander gestaffelt angeordnet sind. Dies gibt Figure 1a näher an (Seitenansicht). Der Spulenträger 2 des Hauptsensors ist gestrichelt gezeichnet.. Die Hilfswicklung 4c besteht aus zwei Teilspulen 1 und II, die gegeneinander geschaltet sind, so dass sich bei richtiger Justierung zur Sendespule 1 die Spannungen in beinen Teilspulen aufheben. Am Ausgang des Verstärkers 5a tritt dann keine Spannung auf.

In gleicher Weise sind in der rechten Hilfswicklung 4d des Hauptsensors die beiden Spulen I und II auf dem Spulenträger 1 angeordnet und ebenfalls so abgeglichen, dass im Normalzustand beide Spulen sich gegenseitig kompensieren und auch im Ausgang des Verstärkers 6a keine Spannung auftritt. Der Verstärker 5a und der Verstärker 6a sind im Referenzeingang mit dem HF-Oszillator 3 verbunden. Sie können durch Signale, die sich in ihrer Phase gegenüber dem Originalsignal des HF-Oszillators unterscheiden, in eine positive oder negative Gleichspannung umgewandelt werden.

Bei schräg leigendem Werkstück 9 (Fig. 1a) wird die Hilfs-wicklung 4d stärker beeinflusst als die Hilfswicklung 4c. Andererseits wird sie nicht so stark seitenabhängig beeinflusst wie die Teilwicklung 4b im rechten Teil des Hauptsensors, da sie weiter zum Zentrum hin liegt. Die Aufgabe der Hilfswicklung 4d ist in diesem Fall, ein Korrrektursignal zu erzeugen, das mit dem von der Hilfswicklung 4c erzeugten Signal verglichen werden kann. Dies wird dadurch realisiert, dass die Spannungen aus den Verstärkern 5a und 6a einem Differenzverstärker 10 zugeführt werden, welcher ein Differenz signal in Abhängigkeit von der Schräglage des Werkstücks abgibt. Dieses Differenzsignal wird dann verwendet, um den Fehler des Hauptsignals aus den Teilwicklungen 4a und 4b des Sensors zu kompensieren.

In den folgenden Ausführungsbeispielen werden teilweise keine Hilfssensoren dargestellt, um die Grundfunktion der Anordnung einfacher darstellen zu können. Jedes der dargestellten Ausführungsbeispiele kann selbstverständlich auch mit Hilfssensoren ausgebildet werden.

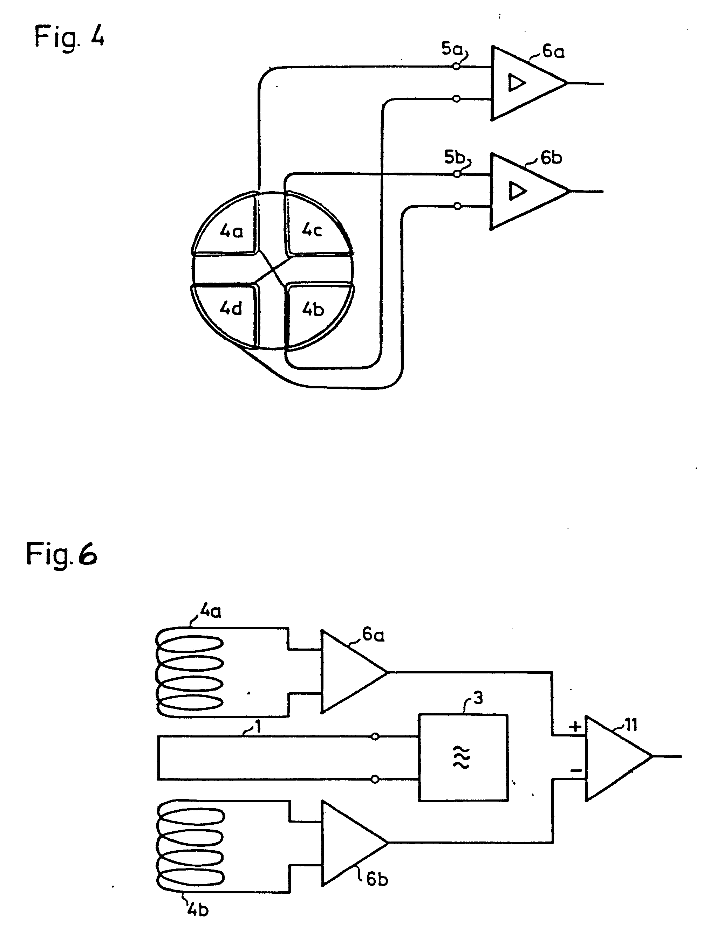

Figure 3 zeigt ein abgewandeltes Ausführungsbeispiel, bei welchem die zwei Teilwicklungen 4a und 4b zu beiden Seiten der Senderspule 1 angeordnet sind. Die Teilwicklungen 4a und 4b sind wie beim Ausführungsbeispiel gemäss Figur 1 gegensinnig gewickelt und gegeneinander geschaltet. Solange sich die Empfängerspulen 4a und 4b in der dargestellten Weise exakt symmetrisch über einem Spalt 7a des Objekts 7 befinden, werden deshalb die Teilspannungen der beiden Teilwicklungen 4a und 4b kompensiert und am Eingang 5 des Verstärkers 6 liegt in diesem Fall kein Signal an. Sobald sich jedoch die Relativlage der Teilwicklungen 4a, 4b seitlich zum Spalt 7a verschiebt, wird die näher zum Spalt 7a hingelangende oder über den Spalt 7a gelangende Teilwicklung aufgrund des bestehenden Spalts weniger durch das Objekt 7 beeinflusst als die andere Teilwicklung. Dementsprechend wird der abgeglichene, symmetrische Zustand der beiden Teilwicklungen 4a und 4b gestört und am Ausgang der Empfängerspule bzw. am Eingang 5 des Verstärkers 6 tritt ein der Abweichung entsprechendes Signal auf, das auf geeignete Weise weiterverarbeitet werden kann.

Figur 4 zeigt ein abgewandeltes Ausführungsbeispiel einer Anordnung gemäss Figur 1. Dabei sind vier Teilwicklungen 4a und 4d vorgesehen, die kreuzweise gegeneinander geschaltet sind. Solange sich ein Objekt genau in der Mitte unter den vier Teilwicklungen 4a bis 4d befindet, ist das System ausgeglichen und es erscheint keine Spannung. Tritt jedoch eine Unsymmetrie auf, d.h. verändert sich die Relativlage des Objekts in bezug auf die vier Teilwicklungen 4a bis 4d, treten an den Eingängen 5a und 5b der Verstärker 6a und 6b der Abweichung proportionale Eingangssignale auf, aus welchen sich die Richtung der Abweichung sowie der Grad der Abweichung ermitteln lässt.

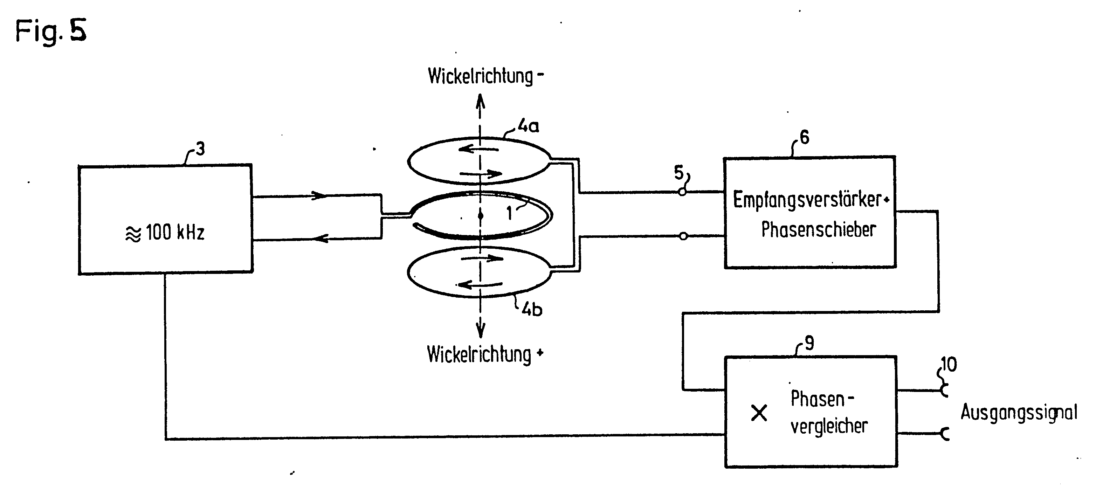

Figur 5 zeigt schematisch eine Auswertungsschaltung, welche an eine der vorstehend beschriebenen Sensoranordnungen angeschlossen werden kann. Die ebenfalls schematisch dargestellten Teilwicklungen 4a und 4b sind dabei an den Eingang 5 des Verstärkers 6 angeschlossen, der ausgangsseitig mit einem Phasenvergleicher 9a verbunden ist. Der Phasenvergleicher 9d wird ausserdem direkt vom HF-Oszillator 3 gespeist, der auch mit der Senderspule verbunden ist. Sobald sich die aus der Senderspule 1 und den Teilwicklungen 4a und 4b bestehende Sensoranordnung gemäss Figur 5 in Pfeilrichtung über den Rand eines Objekts hinausbewegt, tritt eine derartige Induktivitätsveränderung auf, dass sich die Phase des Signals am Eingang 5 des Verstärkers 6 verglichen zur Phase des HF-Oszillators 3 stark verändert. Diese Phasenverschiebung wird im Phasenvergleicher 9 ermittelt und am Ausgang 10 als Analogsignal abgegeben. Dieses Signal kann in geeigneter Weise, z.B. zur Abgabe eines Warnsignals oder dergleichen, weiterverarbeitet werden.

Figur 6 zeigt schematisch ein abgewandeltes Ausführungsbeispiel, bei welchem die beiden Teilwicklungen 4a und 4b mit zwei Verstärkern 6a und 6b verbunden sind und nicht direkt gegeneinander geschaltet werden. Ausgangsseitig sind die beiden Verstärker 6a und 6b an den Eingang eines Vergleichers geschaltet. Die Wirkungsweise der Anordnung ist durchaus vergleichbar mit der Wirkungsweise der Anordnung gemäss Figur 1 bis 4. Solange nämlich die beiden Teilwicklungen 4a und 4b aufgrund der gegebenen Symmetrie Sensoranordnung gleiche Signale mit unterschiedlicher Polarität abgeben, tritt am Vergleicher 11 kein Ausgangssignal auf. Wird jedoch, z.B. durch Annäherung eines Objekts, eines der Teilwicklungen 4a oder 4b in der Induktivität verändert, verändert sich das Eingangssignal an einem der Eingänge des Vergleichers 11 und es tritt ein Ausgangssignal auf. Selbstverständlich sind auch noch andere Möglichkeiten der indirekten Gegenkopplung oder Gegenschaltung bzw. des Vergleichs der Ausgangssignale der beiden Teilwicklungen 4a und 4b denkbar.

## Ansprüche

1. Induktive Sensoranordnung mit wenigstens einer von einem HF-Oszillator (3) mit Wechselstrom gespeisten Sender-Spule (1) zur Erzeugang eines räumlichen elektromagnetichen Felds, das wenigstens eine induktiv mit der Sender-Spule gekoppelte Empfängerspule (4, 4a, 4b) und einen durch das elektromagnetische Feld definierten Objekt-Erfassungsbereich umfasst, zum Ermitteln der Relativlage der Sensoranordnung zu einem metallischen Objekt (7, 9) mit unregelmässiger, z.B. durch einen Spalt (7a) unterbrochener Oberfläche, gekennzeichnet durch folgende Merkmale:

(a) Wenigstens zwei Empfänger-Teilwicklungen (4a, 4b) sind zusammen im elektromagnetischen Feld der Sender-Spule (1) sowie im wesentlichen in gleicher räumlicher Lage und oder in gelichem Abstand zum Objekt-Erfassungsbereich angeordnet;

(b) Die induktive Kopplung und der Wicklungsaufbau von Sender- und Empfängerspule sind derart ausgelegt, dass ohne Objekteinfluss die Empfängerspulen von betragsmässig vorbestimmten, vorzugsweise gleichen Induktionsströmen der Sender-Spule durchflossen werden;

(c) Die Empfänger-Teilwicklungen sind ausgangsseitig so gegeneinander geschaltet, dass die resultierende Signalspannung ohne Objekteinfluss einen durch die Gegeneinanderschaltung reduzierten Betrag, vorzugsweise Null beträgt.

2. Sensoranordnung nach Anspruch 1, dadurch gekennzeichnet, dass die Wicklungs-Achse der Sender-Spule (1) zum Objekt-Erfassungsbereich hin gerichtet ist.

3. Sensoranordnung nach Anspruch 1 oder 2, dadurch gekennzeichnet, dass beide Empfänger-Teilwicklungen (4a, 4b), bezogen auf den Objekt-Erfassungsbereich, auf der gleichen Seite der Sender-Spule (1) angeordnet sind.

4. Induktive Sensoranordnung nach Anspruch 3, dadurch gekennzeichnet, dass die Empfänger-Teilwicklungen (4a, 4b) auf der dem Objekt-Erfassungsbereich zugewandten Seite der Sender-Spule (1) angeordnet sind.

5. Sensoranordnung nach einem der vorangehenden Ansprüche, dadurch gekennzeichnet, dass die Wicklungs-Achsen der Empfänger-Teilwicklungen (4a, 4b) zum Objekterfassungsbereich hin gerichtet sind.

6. Sensoranordnung nach einem der vorangegangenen Ansprüche, dadurch gekennzeichnet, dass die Teilwicklungen (4a, 4b, 4c, 4d) der Empfängerspule symmetrisch zur Sender-Spule (1) angeordnet sind.

7. Sensoranordnung nach einem der vorangegangenen Ansprüche, dadurch gekennzeichnet, dass die Teilwicklungen (4a, 4b) etwa in einer Ebene, bezogen auf den Objekt-Erfassungsbereich, angeordnet sind.

8. Sensoranordnung nach einem der vorangegangenen Ansprüche, dadurch gekennzeichnet, dass die Teilwicklungen (4a, 4b, 4c, 4d) im Querschnitt etwa kreissegmentartig ausgebildet sind und an den Flachseiten mit Abstand voneinander axialsymmetrisch angeordnet sind.

9. Sensoranordnung nach einem der vorangegangenen Ansprüche, dadurch gekennzeichnet, dass die Teilwicklungen (4a, 4b, 4c, 4d) als Mehrzahl von im Querschnitt etwa kreissegmentartig ausgebildeten Spulen ausgebildet sind, wobei die Kreissegmente punktsymmetrisch angeordnet sind.

10. Sensoranordnung nach einem der vorangegangenen Ansprüche, dadurch gekennzeichnet, dass die Sender-Spule (1) aus zwei koaxial und gegensinnig gewickelten Teilwicklungen (1a, 1b) besteht, durch welche elektromagnetische Felder etwa gleicher Stärke, jedoch entgegengesetzter Phase erzeugbar sind, dass jedoch die eine Wicklung (1a) der Sender-Spule in grösserem Abstand zu den Empfänger-Teil (4) angeordnet ist als die zweite Wicklung (1b) der Sender-Spule, so dass aufgrund des Abstandsunterschieds in den Empfängerspulen keine vollständige Kompensation des elektromagnetischen Felds in den Empfängerspulen erreichbar ist.

11. Sensoranordnung nach einem der vorangehenden Ansprüche, dadurch gekennzeichnet, dass die Empfänger-Teilwicklungen (4a, 4b) derart gegensinnig im elektromagnetischen Feld der Senderspule (1) angeordnet sind, dass Ströme mit entgegengerichteter Phasenlage in sie induzierbar sind.

12. Sensoranordnung nach Anspruch 11, dadurch gekennzeichnet, dass die Empfänger-Teilwicklungen (4a, 4b) direkt gegeneinandergeschaltet sind.

13. Messanordnung zum Ermitteln der Relativlage einer Sensoranordnung, insbesondere gemäss einem der vorangehenden Ansprüche, zu einem metallischen Objekt (7, 9), das sich im Objekterfassungsbereich der Sensoranordnung befindet, wobei der Objekterfassungsbereich durch das elektromagnetische Feld wenigstens einer HF-Sender-Spule (1) definiert wird, mit welcher wenigstens eine Empfängerspule (4) induktiv gekoppelt ist, dadurch gekennzeichnet, dass wenigstens zwei Empfänger-Teilwicklungen (4a, 4b) im elektromagnetischen Feld der Senderspule angeordnet sind, und dass die Empfänger-Teilwicklungen (6; 5a, 6a, 10; 6a, 6b; 6, 9a; 11) ausgangsseitig mit einer Auswertungsanord nung zum Ermitteln von Aenderungen des elektromagnetischen Felds der Senderspule verbunden ist.

14. Messanordnung nach Anspruch 13, dadurch gekennzeichnet, dass die Auswertungsschaltung einen Differenzverstärker (10, 11) aufweist.

15. Messanordnung nach Anspruch 13, dadurch gekennzeichnet, dass die Empfängerspule (4) wenigstens zwei direkt gegeneinander geschaltete Teilwicklungen (4a, 4b, 4c, 4d) aufweist, und dass die Auswertungsschaltungen einen Verstärker zur Verstärkung des (5a, 6a; 6; 10; 6a, 6b; 11) aus der Gegeneinanderschaltung resulierenden Signals aufweist.

Fig. 1

Fig. 1a

Fig. 2

Fig. 2a

Fig. 3

Fig. 4

Fig. 6

## Fig. 5

Wickelrichtung −

4a

3

≈ 100 kHz

1

4b

Wickelrichtung +

5

6

Empfangsverstärker +
Phasenschieber

9

× Phasenvergleicher

10

Ausgangssignal

EP 0 305 591 A2